# EUROPÄISCHE PATENTSCHRIFT

(11) **EP 2 497 668 B1**
(45) Veröffentlichungstag und Bekanntmachung des Hinweises auf die Patenterteilung: **05.12.2018**
(21) Anmeldenummer: 12001498.0
(22) Anmeldetag: 06.03.2012
(51) Int. Cl.: B60K 25/02, F16H 57/04

(54) **Kraftfahrzeug mit Getriebe und Getriebeölpumpe**
Motor vehicle with transmission system and transmission system oil pump
Véhicule automobile avec boîte de vitesse et pompe à huile de boîte de vitesse

(30) Priorität: 10.03.2011 DE 102011013487
(43) Veröffentlichungstag der Anmeldung: 12.09.2012
(73) Patentinhaber: Audi AG, 85045 Ingolstadt (DE)
(72) Erfinder: Schenker, Mario, 85049 Ingolstadt (DE); Kischkat, Ralf, Dr., 85080 Gaimersheim (DE); Gieles, Wilhelmus, 85139 Wettstetten (DE); Dumont, Lionel, 85055 Ingolstadt (DE)
(74) Vertreter: Lehle, Josef

(56) Entgegenhaltungen:
- EP-A2- 1 197 371
- WO-A1-2010/142042
- DE-A1-102010 001 259
- US-A- 5 799 744
- US-A- 5 823 282

## Beschreibung

Die Erfindung betrifft ein Kraftfahrzeug nach dem Oberbegriff des Patentanspruchs 1. Ein Kraftfahrzeug ist aus der DE 103 29 215 A1 bekannt.

Eine Getriebeölpumpe dient dazu, Getriebeöl in ein bzw. in einem Getriebe des Kraftfahrzeugs zu fördern. Ein bewegliches Bauteil der Getriebeölpumpe wird üblicherweise durch den Antrieb des Fahrzeugs, typischerweise die Verbrennungskraftmaschine, unmittelbar angetrieben.

Will man nun die Getriebeölpumpe aus Effizienzgründen möglichst klein auslegen, so sieht man vor, dass lediglich bei einer mittleren bis höheren Drehzahl der Verbrennungskraftmaschine genügend Öl gefördert wird, nicht aber durch die Verbrennungskraftmaschine bei einer niedrigen Drehzahl, insbesondere nicht bei der Leerlaufdrehzahl der Verbrennungskraftmaschine. Damit auch bei der Leerlaufdrehzahl der Verbrennungskraftmaschine ausreichend viel Getriebeöl gefördert wird, wird ein weiterer Antrieb vorgesehen, der die Drehzahl der Pumpe erhöht, wenn die Leerlaufdrehzahl zu niedrig ist.

Da man sowohl die Verbrennungskraftmaschine als auch den weiteren Antrieb, der typischerweise als Elektromotor ausgebildet ist, mit der Pumpe koppeln muss, verwendet man ein Summationsgetriebe, insbesondere ein Planetengetriebe. Das bewegliche Bauteil der Pumpe ist hierbei mit der Summenwelle (im Falle eines einfaches Planetensatzes), also dem Planetenträger, des Planetengetriebes gekoppelt. Die anderen Bauteile sind mit den beiden Antrieben gekoppelt, nämlich typischerweise bei einem einfachen Planetensatz das Hohlrad mit der Verbrennungskraftmaschine und das Sonnenrad mit dem Elektromotor.

Dreht sich nun die Verbrennungskraftmaschine schneller als der Elektromotor, dann wird dem Sonnenrad eine Relativbewegung zum Planetenträger aufgezwungen, die unerwünscht ist. Im Regelfall muss somit der Elektromotor stets mitlaufen, um die Getriebeölpumpe durch die Verbrennungskraftmaschine mit der gewünschten Drehzahl zu beaufschlagen. Hier könnte Energie für den Betrieb des Elektromotors eingespart werden.

Die US 5 799 744 A beschreibt ein Hybridfahrzeug mit einer Ölpumpe, einem Antriebsmotor, einem Generator, welcher auch als Antrieb dienen kann, und einer Abtriebswelle, welche über ein Planetengetriebe gekoppelt sind. Die Ölpumpe ist hier über jeweils eine Einwegkupplung einerseits mit dem Generator und andererseits mit dem Planetenradträger und damit mit dem Antriebsmotor gekoppelt.

Die gattungsgemässe EP 1 197 371 A2 offenbart ein Fahrgerät. Dieses umfasst einen Verbrennungsmotor, einen Elektromotor und einen Generator. Von diesen sind jeweilige Achsen über ein Planetengetriebe miteinander gekoppelt. Das Planetengetrieben weist dabei einen Träger, ein Sonnenrad und ein Hohlrad auf. Sowohl das Hohlrad als auch der Träger sind dabei, teilweise über weitere Komponenten, an eine Ölpumpe gekoppelt.

Die US 582 328 A beschreibt ein Hybridfahrzeug mit einer Ölpumpe, einem Motor, einem Generator und einer Abtriebswelle, welche über ein Planetengetriebe gekoppelt sind. Die Ölpumpe wird über eine Rotation einer Sekundärseite einer Ein-Weg-Kupplung angetrieben. Die Ein-Weg-Kupplung ist zwischen einem Träger des Planetengetriebes und dem Motor angeordnet. Die Primärseite der Ein-Weg-Kupplung ist mit dem Motor gekoppelt und die Sekundärseite mit dem Planetengetriebe.

Die DE 10 2010 001 259 A1 offenbart eine Getriebeölpumpe für ein Automatgetriebe eines Kraftfahrzeugs, deren Drehzahl mittels eines im Kraftfluss zwischen dem Antriebsmotor des Kraftfahrzeugs und der Getriebeölpumpe angeordneten schaltbaren Getriebes ins Schnelle oder ins Langsame übersetzbar ist. Damit ist die Getriebeölpumpe auf zwei verschiedenen Drehzahlniveaus betreibbar.

Die WO 2010/142042 A1 offenbart ein Pumpsystem für ein Fluid in einem Fahrzeug, welches von einem Verbrennungsmotor als erste Kraftquelle und einem Elektromotor als zweite Kraftquelle umfasst.

Es ist somit Aufgabe der Erfindung, einem Kraftfahrzeug nach dem Oberbegriff des Patentanspruchs 1 dafür zu sorgen, dass weniger Energie zum Betrieb der Getriebeölpumpe benötigt wird.

Die Aufgabe wird gelöst durch einen Freilauf zwischen dem einen der Antriebe beziehungsweise einer mit einem der Antriebe gekoppelten Welle und einem weiteren Element. Bei dem einen der Antriebe kann es sich insbesondere um den weiteren Antrieb handeln. Durch den Freilauf ist dafür gesorgt, dass der weitere Antrieb nicht betrieben werden muss, wenn der andere Antrieb für den Betrieb der Getriebeölpumpe sorgt.

Die Aufgabe wird dabei durch einen Freilauf zwischen dem Sonnenrad oder einer mit diesem verbundenen Welle und einem weiteren Element gelöst. Durch den Freilauf blockiert das Sonnenrad, auch wenn der Elektromotor ausgeschaltet ist. Man kann somit den Elektromotor ausschalten und dennoch die gewünschte Drehzahl des beweglichen Elements der Getriebeölpumpe erhalten, wenn dieses lediglich von der Verbrennungskraftmaschine angetrieben werden soll.

Hierbei ist das weitere Element ein Gehäuse des Getriebes oder ein Gehäuse des Elektromotors. Diese Gehäuse sind ausreichend stabil, um das Sonnenrad blockieren zu können.

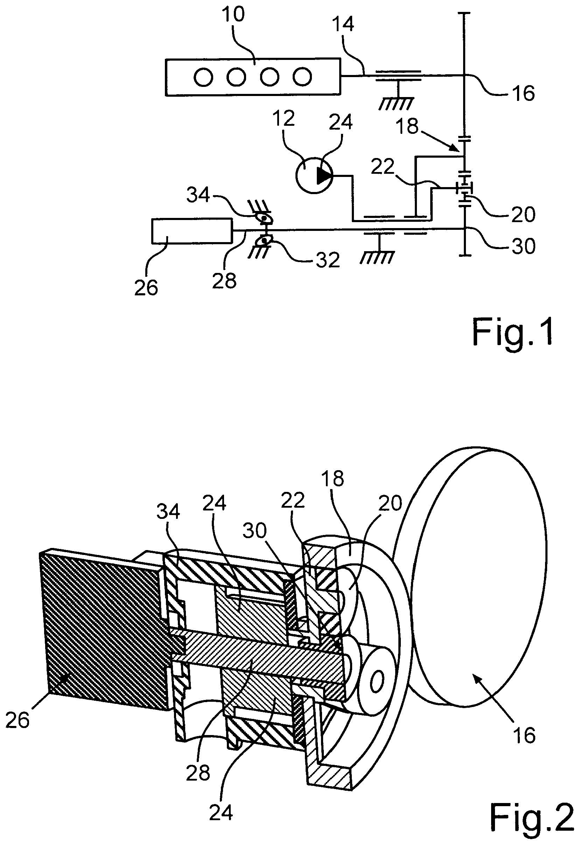

Nachfolgend wird eine bevorzugte Ausführungsform der Erfindung unter Bezug auf die Zeichnung beschrieben, in der
- Fig. 1: die bei der Erfindung bereitgestellten Bauteile eines Kraftfahrzeugs veranschaulicht und
- Fig. 2: einen Teil der Bauteile aus Fig. 1 in perspektivischer Ansicht und teil-weise geschnitten zeigt.

In einem Kraftfahrzeug mit einer Verbrennungskraftmaschine 10 soll diese dazu dienen, eine Getriebeölpumpe 12 anzutreiben. Zu diesem Zweck ist eine Welle 14, die von der Verbrennungskraftmaschine 10 angetrieben wird, mit einem Abtriebsrad 16 gekoppelt, welches mit einem Hohlrad 18 eines Planetengetriebes kämmt. Die Planeten 20 des Planetengetriebes sind über einen Planetenträger 22 miteinander verbunden, und der Planetenträger 22 ist mit einem beweglichen Bauteil 24 der Getriebeölpumpe 12 verbunden.

Damit die Getriebeölpumpe 12 nicht übermäßig dimensioniert werden muss, kann bei niedrigen Drehzahlen der Verbrennungskraftmaschine ein Elektromotor 26 das bewegliche Bauteil 24 der Getriebeölpumpe 12 ebenfalls mit einer Drehzahl beaufschlagen, und zwar indem eine von dem Elektromotor 26 gedrehte Welle 28 mit einem Sonnenrad 30 des Planetengetriebes gekoppelt ist. Damit bei hohen Drehzahlen der Verbrennungskraftmaschine 10 der Elektromotor 26 ausgeschaltet werden kann und sich das Sonnenrad 30 dennoch nicht mitdreht, ist ein Freilauf 32 zwischen dem Sonnenrad 30 bzw. der Welle 28 und dem Getriebegehäuse 34 vorgesehen.

## Patentansprüche

1. Kraftfahrzeug mit einem Getriebe und mit einer Getriebeölpumpe (12) zum Fördern von Getriebeöl in das bzw. in dem Getriebe, wobei ein bewegliches Bauteil (24) der Getriebeölpumpe (12) mit einer Summenwelle (22) eines Planetengetriebes gekoppelt ist, von dem eine erste Antriebswelle (18) von einem Antrieb, insbesondere einer Verbrennungskraftmaschine (10), des Kraftfahrzeugs, bei dessen Betrieb angetrieben wird, und von dem eine zweite Antriebswelle (30) von einem weiteren Antrieb, insbesondere einem Elektromotor (26), antreibbar ist, mit einem Freilauf (32) zwischen einem der Antriebe (10,26) oder einer mit diesem Antrieb (10,26) gekoppelten Welle (28) und einem Gehäuse (34) des Getriebes oder einem Gehäuse des Elektromotors (26),
**dadurch gekennzeichnet, dass**
der Freilauf (32) zwischen einem Sonnenrad des Planetengetriebes oder einer mit dem Sonnenrad verbundenen Welle als den einen der Antriebe (10,26) und dem Gehäuse (34) vorhanden ist.

2. Kraftfahrzeug nach Anspruch 1,
**dadurch gekennzeichnet, dass**
ein bewegliches Bauteil (24) der Getriebeölpumpe (12) mit einem Planetenträger eines Planetengetriebes gekoppelt ist, dessen Hohlrad von einem Antrieb, insbesondere einer Verbrennungskraftmaschine (10), des Kraftfahrzeugs, bei dessen Betrieb angetrieben wird, und dessen Sonnenrad von einem weiteren Antrieb, insbesondere einem Elektromotor (26), antreibbar ist,

## Claims

1. Motor vehicle with a transmission and with a transmission oil pump (12) for pumping transmission oil into or within the transmission, wherein a movable element (24) of the transmission oil pump (12) is coupled to a sum shaft (22) of a planetary gear, from which a first drive shaft (18) is driven by a drive, in particular a combustion engine (10), of the motor vehicle during its operation, and by which a second drive shaft (30) can be driven by an additional drive, in particular an electric motor (26), with a freewheel (32) between one of the drives (10, 26) or a shaft (28) coupled to said drive (10, 26) and a housing (34) of the transmission or a housing of the electric motor (26),
**characterised in that**
the freewheel (32) is provided between a sun gear of the planetary gear or a shaft connected to the sun gear as one of the drives (10, 26) and the housing (34).

2. Motor vehicle according to claim 1,
**characterised in that**
a movable element (24) of the transmission oil pump (12) is coupled to a planetary carrier of a planetary gear, the ring gear of which is driven by a drive, in particular a combustion engine (10), of the motor vehicle during its operation, and its sun gear can be driven by an additional drive, in particular an electric motor (26).

## Revendications

1. Véhicule automobile avec un engrenage et une pompe à huile pour engrenage (12) pour le transport d'huile pour engrenage dans l'engrenage, dans lequel un composant mobile (24) de la pompe à huile pour engrenage (12) est couplé à un arbre totalisateur (22) d'un engrenage planétaire, par lequel un premier arbre d'entraînement (18) peut être entraîné par un entraînement, en particulier un moteur à combustion interne (10), du véhicule automobile, dont le fonctionnement est entraîné, et par lequel un deuxième arbre d'entraînement (30) peut être entraîné par un autre entraînement, en particulier un moteur électrique (26), avec une roue libre (32) entre un des entraînements (10, 26) ou un arbre (28) couplé à cet entraînement (10, 26) et un boîtier (34) de l'engrenage ou un boîtier du moteur électrique (26),
**caractérisé en ce que**
la roue libre (32) est présente entre une roue solaire de l'engrenage planétaire ou un arbre relié à la roue solaire en tant que l'un des entraînements (10, 26) et le boîtier (34).

2. Véhicule automobile selon la revendication 1
**caractérisé en ce que**
un composant mobile (24) de la pompe à huile pour engrenage (12) est couplé à un porte-satellite d'un engrenage planétaire, dont la roue creuse peut être entraînée par un entraînement, en particulier un moteur à combustion interne (10), du véhicule automobile, dont le fonctionnement est entraîné, et dont la roue solaire peut être entraînée par un autre entraînement, en particulier un moteur électrique (26).
